# EUROPÄISCHE PATENTANMELDUNG

(11) **EP 1 244 167 A1**
(43) Veröffentlichungstag der Anmeldung: **25.09.2002**
(21) Anmeldenummer: 01107354.1
(22) Anmeldetag: 24.03.2001
(51) Int. Cl.: H01M 8/02, H01M 8/24

(54) **Endplattenanordnung einer elektrochemischen Zelle der Polymerelektrolytmembranbauart**

(71) Anmelder: Höller, Stefan, 23558 Lübeck (DE); Küter, Uwe, 23558 Lübeck (DE)
(72) Erfinder: Höller, Stefan, 23558 Lübeck (DE); Küter, Uwe, 23558 Lübeck (DE)
(74) Vertreter: Vollmann, Heiko, Dipl.-Ing.

(57) **Zusammenfassung**

Die Endplattenanordnung dientzum Einspannen einer elektrochemischen Zelle oder eines Stapels elektrochemischer Zellen der Polymerelektrolytmembranbauart sowie zur Kontaktierung. Es ist eine Kunststoff oder Metall bestehende Endplatte (1) vorgesehen, über welche die Druckkräfte in die Zelle bzw. den Zellstapel eingeleitet werden. Die Endplatte (1) ist im Bereich der Zelle mit einer Ausgleichsschicht (5) versehen, welche die Krafteinleitung in die Zelle bzw. in den Zellstapel über die Fläche nivelliert. Die Ausgleichsschicht (5) ist mit einer elektrisch leitenden Schicht (6) abgedeckt, um den elektrischen Anschluss (7) zur Zelle zu bilden. Die elektrisch leitende Schicht (6) ist mit einem von außen zugänglichen Anschluss (7) verbunden.

## Beschreibung

Die Erfindung betrifft eine Endplattenanordnung einer elektrochemischen Zelle der Polymerelektrolytmembranbauart, insbesondere eines Zellstapels mit randseitiger Verspannung zwischen zwei Endplatten.

Elektrochemische Zellen der Polymerelektrolytmembranbauart sind bekannt und beispielsweise in DE 195 44 323 A1 beschrieben. Solche Zellen können entweder als Brennstoffzelle, d.h. zur Stromerzeugung aus Brennstoff und Sauerstoff oder aber als Elektrolyseur eingesetzt werden, um unter Einsatz von Strom Wasserstoff und Sauerstoff aus Wasser zu erzeugen. In der praktischen Anwendung werden in der Regel eine Vielzahl elektrochemischer Zellen in Stapelanordnung eingesetzt, so wie dies beispielsweise aus WO 99/28985 und dort insbesondere aus Figur 1 bekannt ist. Dabei ist man stets bestrebt, den Aufbau möglichst kompakt zu gestalten, um eine hohe Energiedichte bei geringer Baugröße und möglichst geringem Gewicht zu erreichen. Ein weiteres Ziel ist stets den Herstellungspreis zu senken.

Eine elektrochemische Zelle besteht im Wesentlichen aus einer Polymerelektrolytmembran, d.h. einer ionendurchlässigen Folie, die beidseitig von einer Gasdiffusionselektrode abgedeckt ist, die die katalytisch wirksame Schicht an die Membran bringt. Die Gasdiffusionselektroden sind jeweils mit einer bipolaren Platte abgedeckt, über welche die Brennstoff- bzw. Sauerstoffzufuhr bzw. -abfuhr erfolgt. An eine solche bipolare Platte schließt sich an der anderen Seite wiederum eine Gasdiffusionselektrode mit Polymerelektrolytmembran an usw.. An beiden Enden eines solchen Stapels von elektrochemischen Zellen ist üblicherweise jeweils eine Endplatte vorgesehen, über welche die elektrische Leistung zu- bzw. abgeführt und über die Druckkräfte in den Zellenstapel eingeleitet werden, welche zum wirksamen Betrieb desselben erforderlich sind. Hierzu weisen die Endplatten randseitig üblicherweise Ausnehmungen auf, durch welche Zuganker geführt sind, die die beiden Endplatten unter Einschluss des dazwischenliegenden Zellenstapels verspannen. Damit der Anpressdruck innerhalb der Zellen über die Fläche möglichst konstant ist, ist es erforderlich, diese Zugkräfte möglichst gleichmäßig über die Fläche in den Stapel einzubringen. Aus diesem Grunde werden die Endplatten regelmäßig aus massivem Metall gefertigt, um eine möglichst geringe Durchbiegung über die Fläche und damit einen gleichmäßigen Anpressdruck zu erreichen. So sind Endplatten bekannter Zellenstapel mit Flächen von beispielsweise 20 cm² typischerweise 1 cm dick. Solche Endplatten erhöhen die Höhe des Zellenstapels, sie sind schwer und im Übrigen auch kostenintensiv in der Herstellung.

Hiervon ausgehend liegt der Erfindung die Aufgabe zugrunde, eine Endplattenanordnung zu schaffen, welche eine gleichmäßige Krafteinleitung ermöglicht und die vorgenannten Nachteile vermeidet.

Gemäß der Erfindung wird dies durch die in Anspruch 1 angegebenen Merkmale gelöst. Vorteilhafte Ausgestaltungen der Erfindung sind in den Unteransprüchen, der nachfolgenden Beschreibung sowie der Zeichnung angegeben.

Demgemäß sieht die Erfindung vor, die Endplatte nicht wie beim Stand der Technik massiv und somit biegesteif auszugestalten, sondern vielmehr durch geschickte Werkstoffkombinationen eine vergleichsweise dünne, leichte und kostengünstig herstellbare Endplattenanordnung gleicher Funktionalität zu schaffen. Zwar weist auch die Endplattenanordnung gemäß der Erfindung eine Endplatte auf, doch kann diese wesentlich labiler ausgebildet sein als beim Stand der Technik. Die Endplatte kann als dünne Metallplatte oder aber bevorzugt aus Kunststoff kostengünstig als Spritzgussteil ausgelegt sein. Die sich aufgrund der von Zugankern ausgehenden Spannkräfte einstellende Durchbiegung dieser Endplatte wird durch eine Ausgleichsschicht nivelliert, die dafür sorgt, dass die Krafteinleitung auf die nachfolgende Zelle bzw. den dahinterliegenden Zellenstapel möglichst gleichmäßig über die Fläche verteilt erfolgt.

Um die elektrische Funktion der Endplattenanordnung zu gewährleisten, ist die Ausgleichsschicht an der zur Zelle weisenden Seite mit einer elektrisch leitenden Schicht, die jedoch keine Tragfunktion hat, versehen. Diese elektrisch leitende Schicht weist einen von außen zugänglichen elektrischen Anschluss auf, über den die elektrische Leistung abgenommen bzw. zugeführt wird. Durch die erfindungsgemäße Schichtkombination der Endplattenanordnung kann sowohl das Volumen eines Zellstapels als auch das Gewicht deutlich reduziert werden, wobei die Herstellungskosten insbesondere in der Serien- und Großserienfertigung im Vergleich zu massiven metallischen Endplatten, wie sie aus dem Stand der Technik bekannt sind, deutlich günstiger sind.

Die Ausgleichsschicht kann durch eine geeignete elastische Platte, vorzugsweise eine Gummiplatte gebildet sein. Bei Verwendung einer solchen elastischen Platte sollte der Rand im Wesentlichen frei liegen, damit das Material beim Anziehen der Zuganker, d.h. beim Aufbringen der Druckkräfte in den Zellenstapel im Randbereich nach außen verdrängt werden kann.

Die Ausgleichsschicht kann auch durch eine Flüssigkeit, eine Paste oder einen unter Druck fließfähigen Stoff gebildet werden. Ein fließfähiger Stoff kann beispielsweise ein Klebfilm zwischen der elektrisch leitenden Schicht und der Endplatte sein, der ab einem bestimmten Druck Fließeigenschaft aufweist, so dass die gewünschte nivellierende Wirkung mit zunehmender Krafteinleitung bei der Montage des Stacks, insbesondere beim Anzug der Zuganker erfolgt.

Die Ausgleichsschicht kann auch durch eine aushärtende Schicht, beispielsweise eine Silikonschicht, einen Lack oder ein Mehrkomponentenepoxidharz gebildet sein, wobei die Aushärteparameter so gewählt werden sollten, dass die Aushärtung der gesamten Ausgleichsschicht erst eintritt, wenn der Stapel von elektrochemischen Zellen fertig montiert und druckbeaufschlagt ist.

Beim Einsatz von flüssigen Ausgleichsschichten, die hinsichtlich der Nivellierung der Krafteinleitung besonders günstig sind, ist es zweckmäßig, in der Endplatte eine Ausnehmung vorzusehen, in der diese Schicht einbringbar ist. Dabei wird die Schicht zur einen Seite durch die Endplatte und zur anderen Seite durch die elektrisch leitende Schicht, die in der Regel durch eine Metallplatte oder Folie gebildet ist, abgedeckt und kann lediglich in schmalen Randbereichen kurzfristig aushärten. Dieses Aushärten der Randbereiche ist gewünscht, da nur so sichergestellt werden kann, dass das flüssige Medium beim Aufbringen der Druckkräfte nicht durch die Randspalten entweicht, sondern durch die bereits ausgehärteten Abschnitte gehalten wird.

Die elektrisch leitende Schicht wird vorteilhaft durch eine dünne Metallplatte oder auch mit Metallfolie gebildet, vorzugsweise aus Kupfer oder einer Kupferlegierung, um eine hohe Leitfähigkeit zu erreichen. Es kann hier beispielsweise eine 0,1 bis 1 mm dicke Kupferfolie gewählt werden, wobei die Dicke der elektrisch leitenden Schicht in ganz entscheidenem Maße von elektrischen Parametern bestimmt wird.

Kupferplatten oder -folien haben zwar eine hohe Leitfähigkeit, sind jedoch verhältnismäßig korrosionsempfindlich. Es ist daher zweckmäßig, eine solche Metallplatte an der zur Zelle weisenden Seite mit einer weiteren elektrisch leitenden, jedoch korrosionsfesten Schicht zu versehen. Eine solche Schicht kann beispielsweise aus Gold bestehen.

Hinsichtlich der Korrosionsfestigkeit ausreichend, jedoch von den Kosten wesentlich günstiger als Gold, ist eine Titanschicht in Form einer Titanfolie. Eine solche Folie kann mittels eines elektrisch leitenden Klebstoffs, z.B. eines elektrisch leitenden Epoxidharzklebstoffs mit der Metallplatte verbunden werden. Als günstig hat sich hier beispielsweise ein silberhaltiger Epoxidharzklebstoff erwiesen, mit dem die Titanfolie flächig mit der Kupferplatte verklebt werden kann.

Um den elektrischen Anschluss der elektrisch leitenden Schicht zu gewährleisten, weist die Metallplatte entweder einen seitlichen Ansatz oder einen rückwärtigen, die Endplatte durchsetzenden Ansatz auf, über den der elektrische Anschluss der Zelle bzw. des Zellstapels erfolgt.

Die Kontaktierung der metallisch leitenden Schicht, insbesondere der Metallplatte kann zwar grundsätzlich wahlweise von der Seite oder rückwärtig durch die Endplatte hindurch erfolgen, besonders günstig istjedoch die rückwärtige Kontaktierung, da hierbei im Wesentlichen eine zentrale Kontaktierung von der Mitte der Fläche her erfolgen kann, bei der aufgrund der Stromflußverteilung in alle Richtungen die Dimensionierung der Schichtdicke geringer erfolgen kann. Die Endplatte, die bevorzugt als Kunststoffspritzgussteil hergestellt ist, weist in den Randbereichen Ausnehmungen für die Zuganker auf sowie, falls eine zentrale Stromdurchführung erfolgen soll, auch eine Ausnehmung zur Kontaktierung der Metallplatte.

Die Dimensionierung der Kunststoffplatte muss so erfolgen, dass sie die Kraft der Zuganker sicher aufnehmen und auf den Zellenstapel übertragen kann, eine gewisse elastische Verformung ist hier jedoch tolerierbar, da diese durch die Ausgleichsschicht kompensiert wird.

Die Erfindung ist nachfolgend anhand der in der Zeichnung dargestellten Ausführungsbeispiele erläutert. Es zeigen :
- Fig. 1: eine Ansicht auf eine Endplattenanordnung von der Zelle aus,
- Fig. 2: einen Schnitt, längs der Schnittlinie II-II in Figur 1,
- Fig. 3: eine Ansicht auf die Rückseite der Endplattenanordnung,
- Fig.4: in schematischer Schnittdarstellung eine Endplatte mit Ausgleichsschicht kraftfrei,
- Fig. 5: die gleiche Anordnung nach Kraftbeaufschlagung,
- Fig. 6: in vergrößerter Darstellung einen Schnitt gemäß Fig. 2 einer anderen Ausführungsvariante.

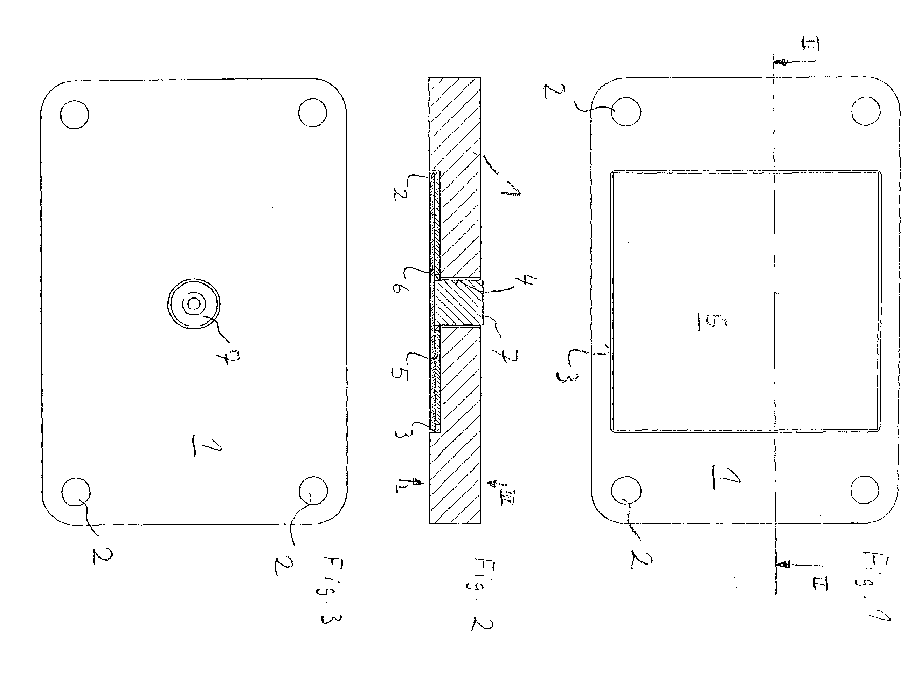

Die anhand der Figuren 1 bis 3 dargestellte Endplattenanordnung wird paarweise eingesetzt und schließt ein oder zweckmäßigerweise mehrere hintereinander angeordnete elektrochemische Zellen der Polymerelektrolytmembranbauart, wie sie beispielsweise in DE 195 44 323 A1 beschrieben sind ein. Der Aufbau eines solchen Zellenstapels ist dort insbesondere anhand von Figur 1 beschrieben, auf die hiermit verwiesen wird. Eine Endplattenanordnung weist eine Endplatte 1 in rechteckiger Form auf, welche den Zellenstapel an allen vier Seiten überragt. Die Endplatte 1 ist als Kunststoffspritzgussteil ausgebildet, weist vier durchsetzende Ausnehmungen 2 in den Eckbereichen auf sowie eine flache quadratische Ausnehmung 3 in der zur Zelle hin gerichteten Seite. Diese flache Ausnehmung 3 bildet über die Fläche eine Vertiefung und ist lediglich im zentralen Bereich in der Mitte der Platte 1 durchgängig. Dieser Bereich ist mit 4 gekennzeichnet. Die Ausnehmung 3 ist flächenmäßig entsprechend der Größe der darunter liegenden Zelle dimensioniert.

In der Ausnehmung 3 liegt an der Endplatte 1 unmittelbar anliegend eine Ausgleichsschicht 5 in Form einer elastischen Gummiplatte sowie eine diese abdeckende Metallplatte 6. Die Metallplatte 6 liegt mit geringem seitlichem Spiel in der Ausnehmung, wohingegen die Ausgleichsschicht 5 ein deutliches Spiel zum Rand der Ausnehmung 3 hin aufweist, wie dies aus Figur 2 auch hervorgeht. Hierdurch ist ein Freiraum gebildet, der dazu dient, dass bei Kraftbeaufschlagung das Material der Ausgleichsschicht 5 seitlich ausweichen kann.

Die Metallplatte 6 ist rückseitig mit einem zylindrischen Ansatz 7 versehen, der fest und leitend mit dieser verbunden ist, durch die Ausgleichsschicht 5 sowie durch die zentrale Ausnehmung 4 in der Endplatte 1 hindurchgeführt ist, so dass über diesen zylindrischen Ansatz 7 die Metallplatte 6 elektrisch kontaktierbar ist.

Die Metallplatte 6 besteht aus Kupfer und ist an ihrer zur Zelle weisenden Seite I mit einer Titanfolie belegt. Titanfolie ist mittels eines elektrisch leitenden Klebstoffs mit der Kupferplatte verbunden.

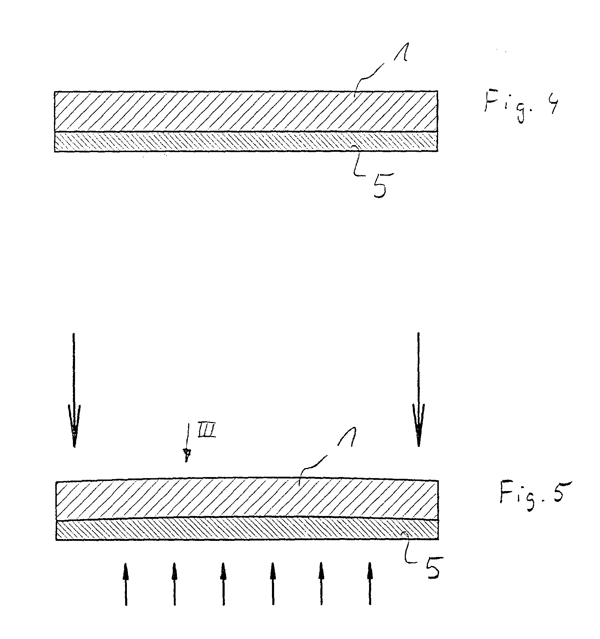

In unbelastetem Zustand ist die Endplatte 1 im Bereich der Ausnehmung 3 planparallel ausgebildet (sie weist zumindest an ihrer zur Zelle weisenden Seite eine plane Fläche auf), genauso wie die daran anliegende Ausgleichsschicht 5 (siehe Fig. 4). Im Belastungsfall, wenn ein Zellstapel zwischen zwei Endplattenanordnungen gemäß der vorbeschriebenen Art eingespannt ist und Zuganker durch die Ausnehmungen 2 geführt sind, wird mittels der Zuganker eine Druckkraft bei Brennstoffzellen zwischen 50 und 200 N/cm² und bei Elektrolyseuren zwischen 1000 und 4000 N/cm² aufgebracht. Diese Kraft wird im Bereich der Ausnehmungen 2 von der Rückseite III der Endplatten 1 eingeleitet, so dass sich die Endplatte 1, wie in Figur 5 dargestellt, verformt. Durch den Gegendruck des Zellstapels wird die Endplatte 1 über diesen hinweg gekrümmt, so dass die nach außen weisende Seite III leicht konvex und die Innenseite, an der die Ausgleichsschicht 5 anliegt, leicht konkav verformt ist.

Um zu verhindern, dass entsprechend dieser Verformung eine ungleichmäßige Krafteinleitung in den darunter liegenden Zellstapel erfolgt, ist die Ausgleichsschicht 5 vorgesehen, die sich entsprechend der ungleichmäßigen Krafteinleitung über die Endplatte 1 in den seitlichen Bereichen mehr verformt als in der Mitte. Im Idealfall, der sich insbesondere dann einstellt, wenn die Ausgleichsschicht 5 hydraulische Eigenschaften aufweist, wird die ungleichmäßige Krafteinleitung durch die Endplatte 1 mittels der Ausgleichsschicht 5 vollständig ausgeglichen.

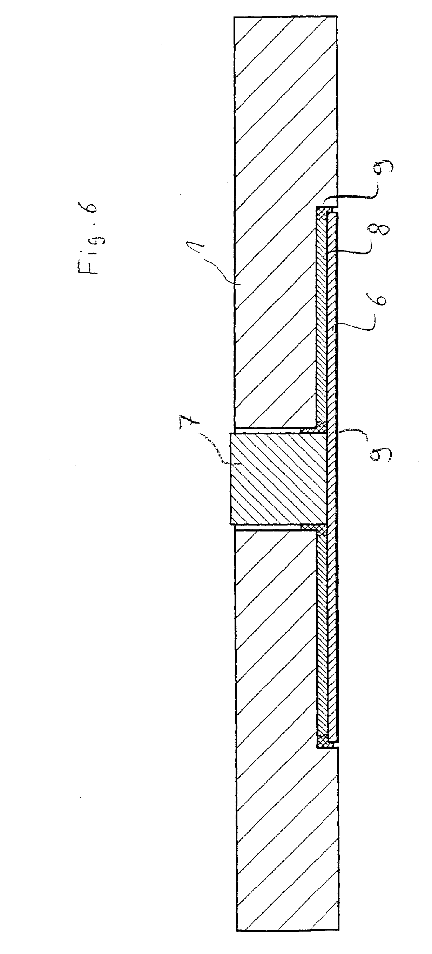

Die in Figur 6 dargestellte Endplattenanordnung weist die gleiche Endplatte 1 wie vorbeschrieben auf, auch ist die Metallplatte 6 ist in gleicher Weise ausgebildet. Im Unterschied zu der vorbeschriebenen Ausführungsvariante istjedoch eine Ausgleichsschicht 8 aus selbstaushärtendem Silikon vorgesehen.

Diese Ausgleichsschicht 8 wird in die Ausnehmung 3 der Endplatte 1 eingebracht, wonach die Metallplatte 6 mit ihrem zylindrischen Ansatz 7 eingelegt wird. In dieser vormontierten Stellung verbleibt das Bauteil eine gewisse Zeit, bis sich in den Randbereichen zwischen der zentralen Ausnehmung 4 und dem Ansatz 7 sowie seitlich zwischen Metallplatte 6 und Ausnehmung 3 ein ausgehärteter Bereich 9 einstellt. Diese Bereiche 9 sind immer noch hoch elastisch, jedoch so weit ausgehärtet, dass bei weiterer Krafteinleitung sichergestellt ist, dass das noch nicht ausgehärtete Medium 8 nicht über die Randspalten entweichen kann. Es ist ersichtlich, dass eine solche Anordnung besonders günstig ist, da die Ausgleichsschicht fast hydraulische Eigenschaften hat, so dass eine besonders gleichmäßige Kraftverteilung über die Fläche erfolgt. Wenn dann das Stack montiert ist und die Zuganker angezogen sind, wird über längere Zeit, zum Beispiel im Betrieb, die Ausgleichsschicht 8 vollständig aushärten, was jedoch unproblematisch ist, da sich das Kräftegleichgewicht bereits eingestellt hat und die verbleibende Restelastizität dieser Schicht ausreicht, um etwaige Spannungsspitzen, die sich durch thermische Einflüsse einstellen können, zu kompensieren.

### Bezugszeichenliste

- 1 -: Endplatte
- 2 -: Ausnehmungen am Rand
- 3 -: Ausnehmung flach
- 4 -: zentrale Ausnehmung
- 5 -: Ausgleichsschicht aus Gummi
- 6 -: Metallplatte
- 7 -: zylindrischer Ansatz
- 8 -: Ausgleichsschicht aus Silikon
- 9 -: ausgehärteter Bereich

## Patentansprüche

1. Endplattenanordnung einer elektrochemische Zelle der Polymerelektrolytmembranbauart, insbesondere eines Zellstapel, mit randseitiger Verspannung zwischen zwei Endplatten mit folgenden Merkmalen:
- es ist eine aus Kunststoff oder Metall bestehende Endplatte (1) vorgesehen, über die die Druckkräfte in die Zelle bzw. den Zellstapel eingeleitet werden,
- auf der zur Zelle weisenden Seite der Endplatte (1) ist eine elektrisch leitende Schicht (6) vorgesehen, die mit einem von außen zugänglichen elektrischen Anschluss (7) verbunden ist, und
- zwischen Endplatte (1) und der elektrisch leitenden Schicht(6) ist eine Ausgleichsschicht (5; 8) vorgesehen, welche die Krafteinleitung in die Zelle bzw. den Zellstapel über die Fläche nivelliert.

2. Endplattenanordnung nach Anspruch 1, **dadurch gekennzeichnet, dass** die Ausgleichsschicht durch eine elastische Platte (5), vorzugsweise eine Gummiplatte, gebildet ist, deren Außenrand im Wesentlichen frei liegt.

3. Endplattenanordnung nach einem der vorhergehenden Ansprüche, **dadurch gekennzeichnet, dass** die Ausgleichsschicht durch eine Flüssigkeit, eine Paste oder einen unter Druck fließfähigen Stoff gebildet ist.

4. Endplattenanordnung nach einem der vorhergehenden Ansprüche, **dadurch gekennzeichnet, dass** die Ausgleichsschicht durch eine aushärtende Silikonschicht (8) gebildet ist.

5. Endplattenanordnung nach einem der vorhergehenden Ansprüche, **dadurch gekennzeichnet, dass** die elektrisch leitende Schicht durch eine vorzugsweise aus Kupfer oder einer Kupferlegierung bestehenden Metallplatte (6) gebildet ist.

6. Endplattenanordnung nach einem der vorhergehenden Ansprüche, **dadurch gekennzeichnet, dass** die Metallplatte (6) an der zur Zelle weisenden Seite mit einer elektrisch leitenden und korrosionsfesten, vorzugsweise aus Gold bestehenden Schicht versehen ist.

7. Endplattenanordnung nach einem der vorhergehenden Ansprüche, **dadurch gekennzeichnet, dass** die korrosionsfeste Schicht durch eine Titanschicht gebildet ist.

8. Endplattenanordnung nach einem der vorhergehenden Ansprüche, **dadurch gekennzeichnet, dass** die Titanschicht durch eine Titanfolie gebildet ist, die vorzugsweise mittels eines silberhaltigen oder anderen elektrisch leitenden Epoxidharzklebstoffs mit der Metallplatte (6) verbunden ist.

9. Endplattenanordnung nach einem der vorhergehenden Ansprüche, **dadurch gekennzeichnet, dass** die Metallplatte (6) einen die Endplatte (1) durchsetzenden oder seitlichen Ansatz (7) aufweist, der den einen elektrischen Anschluss der Zelle bzw. der Zellstapels bildet.

10. Endplattenanordnung nach einem der vorhergehenden Ansprüche, **dadurch gekennzeichnet, dass** die Endplatte (1) einen die Metallplatte (6) und die Ausgleichsschicht (8) umgebenden Rand aufweist.

11. Endplattenanordnung nach einem der vorhergehenden Ansprüche, **dadurch gekennzeichnet, dass** die Endplatte (1) als Kunststoffspritzgussteil ausgebildet ist, mindestens eine Ausnehmung (4) zur Kontaktierung der Metallplatte (6) und randseitige Ausnehmungen (2) für Zuganker aufweist.
